# EUROPÄISCHE PATENTSCHRIFT

(11) **EP 2 592 191 B1**
(45) Veröffentlichungstag und Bekanntmachung des Hinweises auf die Patenterteilung: **02.01.2019**
(21) Anmeldenummer: 12189183.2
(22) Anmeldetag: 19.10.2012
(51) Int. Cl.: F16L 21/00, E03B 7/04, F16L 41/02, F16L 55/027

(54) **ROHRFÖRMIGES VERBINDUNGSELEMENT**
TUBULAR CONNECTION ELEMENT
ÉLÉMENT DE LIAISON TUBULAIRE

(30) Priorität: 08.11.2011 DE 102011055138
(43) Veröffentlichungstag der Anmeldung: 15.05.2013
(73) Patentinhaber: Viega Technology GmbH & Co. KG, 57439 Attendorn (DE)
(72) Erfinder: Rischen, Christian, 59889 Eslohe (DE); Rosenthal, Jörg, 51580 Reichshof/Eckenhagen (DE); Hartmann, Anton, 57439 Attendorn (DE)
(74) Vertreter: Cohausz & Florack

(56) Entgegenhaltungen:
- EP-A1- 1 882 784
- FR-A- 625 733
- GB-A- 1 490 889
- US-A- 1 663 271
- US-A- 3 894 562

## Beschreibung

Die vorliegende Erfindung betrifft ein rohrförmiges Verbindungselement. Die Erfindung betrifft darüber hinaus Anordnungen mit dem rohrförmigen Verbindungselement.
Es ist aus dem Stand der Technik bekannt, Rohre mittels Verbindungselementen, auch Fittings genannt, zu verbinden. Hierbei werden häufig nicht nur gerade Verbindungen zum nächsten Rohrabschnitt ermöglicht, sondern es werden häufig auch unterschiedliche Funktionen durch die Verbindungselemente bereitgestellt, wie beispielsweise Richtungswechsel, Durchmesserwechsel oder Abzweigungen.
Auf diese Weise können nahezu beliebige Rohrleitungssysteme, beispielsweise für sowohl kaltes wie auch warmes Trinkwasser, verlegt werden. Insbesondere können einzelne Wasserentnahmestellen auf einer Etage eines Gebäudes bereitgestellt werden. Problematisch hierbei ist allerdings, dass bei bestimmten Konfigurationen der Rohrleitungssysteme Wasser in bestimmten Breichen stagnieren kann. So kann bei Einzelzuleitungen oder Reihenleitungen nur das gesamte Wasser in der Leitung ausgetauscht werden, wenn an der entsprechenden Entnahmestelle der Einzelzuleitung oder der jeweils letzten Entnahmestelle der Reihenzuleitung Wasser entnommen wird. Dies kann umgangen werden, indem Ringleitungen vorgesehen werden, so dass das Wasser der Ringleitung auch bei der Entnahme an einer beliebigen Entnahmestelle der Ringleitung gespült wird, sofern ein ausreichendes Volumen entnommen wird bzw. die Entnahme ausreichend frequentiert stattfindet. Problematisch ist allerdings, dass auch in Ringleitungen Wasser stagniert, falls für längere Zeit an keiner der Entnahmestellen der Ringleitung Wasser entnommen wird.

Beispielsweise ist aus der Druckschrift EP 1 882 784 A1 bekannt, zur Vermeidung von Stagnation in Ringleitungen in der Trinkwassertechnik einen Fitting in Form eines T-Stücks vorzusehen, bei welchem vor der Einfädelöffnung bzw. dem abzweigenden Anschlussstück des T-Stücks eine Querschnittsverengung vorgesehen ist, um mittels einer durch den Venturi-Effekt entstehenden Verringerung des statischen Drucks eine Zirkulation in der an das abzweigende Anschlussstück angeschlossene Ringleitung zu erzielen. Es wird also die Stagnation in der angeschlossenen Ringleitung vermieden, auch wenn aus der Ringleitung selbst kein Wasser durch Entnahmestellen entnommen wird. Allerdings ist hierzu einen spezielles relativ komplexen Fitting in Form eines T- oder Doppel-T-Stücks zur Montage vorgesehen. Auch ist aufgrund der strömungsdynamischen Auslegung von besonderer Bedeutung, dass das abzweigende Anschlussstück des T-Stück unter bestimmten Winkeln in das T-Stück mündet.

Die US 1,663,271 A beschreibt ein Rohrfitting für ein Heizungssystem, welches an einer Öffnung einen verengten Querschnitt aufweist. Das Fitting ist über jeweils ein Innengewinde und ein Außengewinde mit Anschlussstücken verbindbar.

In der FR 625 733 A wird ein Anschlussstück zur Druckminderung in einem Heizungssystem offenbart. Das Anschlussstück ist über Gewinde mit einem T-Stück oder Kreuz verbindbar.

Die GB 1 490 889 A betrifft eine Blende zur Reduzierung des Querschnitts in einem Rohrsystem. Die Blende wird innerhalb eines Pressfittings angeordnet.

In der US 3,894,562 A wird ein Durchflussbegrenzer für eine Flüssigkeitsleitung mit den Merkmale des Oberbegriffs des Anspruchs 1 offenbart. Der Durchflussbegrenzer weist eine Innenbohrung auf, welche konisch konvergiert und sich anschließend als Diffusor wieder konisch erweitert.

Je komplexer ein Fitting ist, desto aufwendiger ist jedoch seine Herstellung. Des Weiteren besteht bei komplexeren Fittings die Gefahr, dass diese fehlerhaft, beispielsweise verkehrt herum, eingebaut werden. Nach erfolgter Montage ist häufig auch nicht überprüfbar, ob der entsprechende Fitting korrekt montiert wurde oder ob der Fitting überhaupt eingebaut wurde und nicht etwa stattdessen ein konventionelles T-Stück ohne eine integrierte Düse.

Aufgrund der großen Vielzahl an konventionellen T-Stücken, welche sich beispielsweise in den Durchmessern, den Längen der Anschlussstutzen und/oder den Materialien unterscheiden, müssen diese konventionellen T-Stücke durch jeweils entsprechend angepasste T-Stücke mit Querschnittsverengung ersetzt werden. Diese große Anzahl an Fittings ist sowohl bei der Herstellung als auch bei der Montage nachteilig.

Der vorliegenden Erfindung liegt somit die Aufgabe zugrunde, die Stagnation in Leitungssystemen kostenngünstig und trotzdem effektiv bei einer leichten und sicheren Montage zu vermeiden.

Die Aufgabe wird erfindungsgemäß durch ein rohrförmiges Verbindungselement mit den Merkmalen des Anspruchs 1 gelöst: ein rohrförmiges Verbindungselement mit einer ersten Öffnung, einer zweiten Öffnung, einem ersten Verbindungsabschnitt, einem zweiten Verbindungsabschnitt, einem Düsenabschnitt und einem Kontrollbereich gelöst. Hierbei sind der erste Verbindungsabschnitt mit einem ersten Anschlussstück verbindbar, der zweite Verbindungsabschnitt mit einem zweiten Anschlussstück verbindbar und der Düsenabschnitt in das zweite Anschlussstück einführbar. Außerdem ist nach der Verbindung mit dem ersten Anschlussstück und dem zweiten Anschlussstück der Kontrollbereich von außen sichtbar. Der erste Verbindungsabschnitt ist mit dem ersten Anschlussstück und der zweite Verbindungsabschnitt ist mit dem zweiten Anschlussstück verpressbar, wobei die Verbindungsabschnitte in das entsprechende Anschlussstück einführbar sind und als Stützabschnitt ausgebildet sind, wobei der Düsenabschnitt vollständig in das zweite Anschlussstück einführbar ist, wobei zwischen dem ersten Verbindungsabschnitt und dem zweiten Verbindungsabschnitt ein Flanschbereich auf der Außenumfangsfläche vorgesehen ist, welcher einen Anschlag für die Anschlussstücke vorsieht und den Kontrollbereich zur Verfügung stellt, wobei der zweite Verbindungsabschnitt sich in Strömungsrichtung des Mediums gesehen an den ersten Verbindungsabschnitt anschließt und der Düsenabschnitt sich an den zweiten Verbindungsabschnitt anschließt.

Unter einem rohrförmigen Verbindungselement wird grundsätzlich jedes Verbindungselement verstanden, welches in der Lage ist ein Medium, vorzugsweise Kalt- oder Warmwasser, von der ersten zur zweiten Öffnung zu transportieren und durch welches eine Verbindung zu zwei Anschlussstücken herstellbar ist. Hierbei ist das rohrförmige Verbindungselement vorzugsweise im Wesentlichern ein gerader Kreiszylinder. Es ist allerdings auch denkbar, die Querschnittsfläche des rohrförmigen Verbindungselements beispielsweise prismenförmig oder oval zu gestalten. Auch die erste und die zweite Öffnung können unterschiedlicher Geometrie sein. Vorzugsweise ist das rohrförmige Verbindungselement allerdings im Wesentlichen rotationssymmetrisch um die Hauptachse des rohrförmigen Verbindungselements. Hierdurch kann es als Drehteil besonders kostengünstig hergestellt werden.

Unter Verbindungsabschnitten ist ein Abschnitt des rohrförmigen Verbindungselements gemeint, welcher durch kraftschlüssige, formschlüssige und/oder stoffschlüssige Verbindung mit einem Anschlussstück verbunden werden kann. Bevorzugt sind allerdings Verbindungsabschnitte zur kraft- und/oder formschlüssigen Verbindung vorgesehen. Die Verbindung ist vorzugsweise unlösbar, um eine möglichst sichere Verbindung zu garantieren.

Das Durchströmen eines Mediums durch das rohrförmige Verbindungselement erzeugt eine Erhöhung des dynamischen Drucks und eine Verringerung des statischen Drucks im Bereich des Düsenabschnitts. Durch den im Vergleich zur nicht verengten Rohrleitung verringerten statischen Druck wird eine Zirkulation des Mediums durch eine Ringleitung, welche im Bereich des Düsenabschnitts mündet, erreicht. Hierzu kann sich beispielsweise ein sich abzweigendes Anschlussstück eines T-Stücks im Bereich der Düse befinden, aus welchem dann das Medium herausgedrückt wird und dadurch die sich an das abzweigende Anschlussstück anschließende Leitung durchgespült wird. Es kann jedoch auch in anderen Fittings als besagten T-Stücken, zum Beispiel Fittings mit mehreren Abzweigungen, ein solcher Unterdruck erzeugt werden und eine Zirkulation in Gang gesetzt werden.

Dadurch, dass der Düsenabschnitt in das zweite Anschlussstück einführbar ist, wird der Bereich eines geringeren statischen Druckes in dem Bauteil erzeugt, welches das zweite Anschlussstück aufweist. Somit kann das rohrförmige Verbindungselement mit nahezu beliebigen konventionellen Bauteilen, vorzugsweise jedoch mit T-Stücken und Rohren, kombiniert werden. Das Ersetzen von konventionellen Bauteilen durch spezielle Bauteile mit Querschnittsverengung entfällt, da durch die Kombination mit dem erfindungsgemäßen rohrförmigen Verbindungselement eine Verringerung des statischen Drucks und damit eine Zirkulation auch mit konventionellen Bauteilen erzeugt werden kann. Somit kann das rohrförmige Verbindungselement einfach als zusätzliches Element zwischen konventionellen Bauteilen montiert werden, wobei der Düsenabschnitt vollständig in das zweite Anschlussstück einführbar ist.

Der Düsenabschnitt ist hierbei vorzugsweise als Querschnittsverengung des rohrförmigen Verbindungselements vorgesehen, um den Venturi-Effekt hervorzurufen. Die Querschnittsverengungen können grundsätzlich beliebige Geometrien aufweisen, um das rohrförmige Verbindungselement beispielsweise möglichst strömungsdynamisch und/oder stabil auszugestalten. Vorzugsweise weist auch der Düsenabschnitt eine Rotationssymmetrie um die Hauptachse des rohrförmigen Verbindungselements auf.

Durch den Kontrollbereich, welcher nach der Verbindung des rohrförmigen Verbindungselements mit dem ersten Anschlussstück und dem zweiten Anschlussstück von außen sichtbar ist, ist ein Bereich an dem rohrförmigen Verbindungselement vorgesehen, welcher es dem Monteur ermöglicht, vor, während und auch noch nach vollendeter Montage die Position und insbesondere die Ausrichtung des eingebauten rohrförmigen Verbindungselements zu kontrollieren und eventuell vor einem Verbindungsschritt, wie zum Beispiel einem Verpressen, die Position des rohrförmigen Verbindungselements zu korrigieren. Dies ist bei Bauteilen, welche eine Düse bereits eingebaut haben oder in welche ein eine Düse aufweisendes Element vollständig eingeführt wird, nicht möglich. Der Kontrollbereich kann insbesondere ein Übergangsbereich zwischen den Verbindungsabschnitten sein.

Dadurch, dass ein separat ausgebildetes rohrförmiges Verbindungselement vorgesehen ist, welches einen Düsenabschnitt aufweist, der in das zweite Anschlussstück einführbar ist, und welches einen Kontrollbereich aufweist, der auch nach der Verbindung mit dem ersten und dem zweiten Anschlussstück von außen sichtbar ist, werden somit mehrere Effekte erzielt. Zum einen wird ein besonders kostengünstig herstellbares rohrförmiges Verbindungselement bereitgestellt. Dies wird insbesondere durch den einfachen Aufbau erreicht. Zusätzlich werden die Produktionskosten dadurch gesenkt, dass das erfindungsgemäße rohrförmige Verbindungselement mit konventionellen Bauteilen, insbesondere T-Stücken, kompatibel ist und diese weiterhin verwendet werden können. Gleichzeitig gestaltet sich die Montage durch den vorgesehenen Kontrollbereich besonders einfach und sicher.

In vorteilhafter Weise kann ein erfindungsgemäßes Verbindungselement, abgesehen von Anpassungen des Durchmesser an das Rohrsystem bzw. die Anschlussstücke und/oder der Wahl des Materials, ohne konstruktive Änderungen für unterschiedlichste T-Stücke verwendet werden und gleichzeitig kann trotzdem eine effektive Zirkulation in Ringleitungen erzeugt werden kann. Selbst T-Stücke mit unterschiedlichen Innenkonturen können mit dem erfindungsgemäßen rohrförmigen Bauteil genutzt werden. Eine Anpassung der Länge des rohrförmigen Verbindungselements an das das zweite Anschlussstück aufweisende Bauteil ist somit weitestgehend nicht erforderlich.

Erfindungsgemäß schließt sich bei dem rohrförmigen Verbindungselement - in Strömungsrichtung des Mediums gesehen - der zweite Verbindungsabschnitt an den ersten Verbindungsabschnitt an. An den zweiten Verbindungsabschnitt wiederum schließt sich der Düsenabschnitt an. Die einzelnen Abschnitte können dabei auch durch Übergangsbereiche, welche beispielsweise den Innen- oder Außendurchmesser des rohrförmigen Verbindungselements verändern, ineinander übergehen.

Der Düsenabschnitt kann in Bezug auf die Strömungsrichtung sowohl symmetrisch wie auch asymmetrisch aufgebaut sein. Bei einem symmetrischen Aufbau würde das gleiche Strömungsprofil unabhängig von der Richtung der Strömung erzeugt. Da viele Leitungen häufig nur in eine Richtung von einem Medium durchflossen werden, ist ein an diese Durchflussrichtung angepasstes Düsenprofil vorteilhaft. Somit ist weiterhin bevorzugt, wenn die Einbaurichtung der Düse anhand des Kontrollbereichs zu erkennen ist. Diese kann beispielsweise mit einem Pfeil auf dem Kontrollbereich angegeben werden. Dies erleichtert weiterhin die Montage und eine Kontrolle derselben.

Der erste Verbindungsabschnitt ist mit dem ersten Anschlussstück und der zweite Verbindungsabschnitt ist mit dem zweiten Anschlussstück verpressbar. Hierbei sind die Eigenschaften der Verbindungsabschnitte also so zu wählen, dass diese entweder derart stabil sind, dass ein über den Verbindungsabschnitt gestülptes Anschlussstück durch eine radial nach innen wirkende Kraft mit diesen verpresst werden kann oder dass diese derart verformbar sind, dass das Anschlussstück mit einem in dieses hinein geschobene Anschlussstück verpresst werden kann. Dabei ist auch auf eine entsprechende Abstimmung des Material von Anschlussstück und Verbindungsabschnitt zu achten, damit eine dichte Verbindung durch die Verpressung erreicht wird. Vorzugsweise sind die Anschlussstücke und die Verbindungsabschnitte, besonders bevorzugt das gesamte rohrförmige Verbindungselement, aus demselben Material.

Insbesondere ist hierzu vorgesehen, dass die Innen- bzw. Außenumfangsflächen der Verbindungsabschnitte an die Außen- bzw. Innenumfangsflächen der Anschlussstücke angepasst sind.

Die erste Weiterbildung des erfindungsgemäßen rohrförmigen Verbindungselements hat insbesondere den Effekt, dass das erfindungsgemäße rohrförmige Verbindungselement beispielsweise mittels desselben Presswerkzeugs mit den Anschlussstücken verbunden werden kann, mit dem auch die restlichen zu verpressenden Bauteile verbunden werden. Hierdurch wird die Montage weiterhin vereinfacht und gleichzeitig eine sichere unlösbare Verbindung geschaffen.

Gemäß einer weiteren Ausgestaltung des erfindungsgemäßen rohrförmigen Verbindungselements weist mindestens ein Verbindungsabschnitt eine Aufnahme für ein Dichtelement, beispielsweise einen O-Ring, auf. Hierdurch wird die Dichtigkeit der Verbindung ohne große konstruktive Änderungen weiterhin erhöht. Dies gilt insbesondere für eine Pressverbindung. Vorzugsweise weist insbesondere der erste Verbindungsabschnitt eine Aufnahme für ein Dichtelement auf.

Die Verbindungsabschnitte sind in das entsprechende Anschlussstück einführbar und als Stützabschnitt ausgebildet. Dabei ist es vorteilhaft, dass der zweite Verbindungsabschnitt in das zweite Anschlussstück einführbar ist und sich der Düsenabschnitt an den zweiten Verbindungsabschnitt anschließt. Dadurch ist der Düsenabschnitt zusammen mit dem zweiten Verbindungsabschnitt in das zweite Anschlussstück einzuführen. Da normalerweise Rohrenden in die Anschlussstücke von Bauteilen, insbesondere von T-Stücken, eingeführt werden, wird nun ohne jegliche Modifikationen des das Anschlussstück aufweisende Bauteils das erfindungsgemäße rohrförmige Verbindungselement in das Anschlussstück eingeführt und dieses kann wie bisher beispielsweise mittels eines Pressgeräts verpresst werden. Dadurch ergibt sich eine besonders einfache Montage, wobei gleichzeitig die bisherigen Bauteile verwendet werden können und trotzdem effektiv die Stagnation von Trinkwasser durch den Venturi-Effekt in einer abzweigenden Ringleitung verhindert wird.

Ist zumindest ein Anschlussstück in den entsprechenden Verbindungsabschnitt einführbar und der Verbindungsabschnitt als Pressabschnitt ausgebildet, können Rohre als Anschlussstücke besonders einfach an das erfindungsgemäße Verbindungselement angeschlossen werden. Da Rohre in der Regel flexibel abgelängt werden müssen, sind die Anschlussstücke an den zu verbindenden Rohrenden kreiszylinderförmig Enden. Diese eigenen sich besonders zum Einführen in einen Verbindungsabschnitt, welcher dann spezielle Ausgestaltungen, beispielsweise Aufnahmen für O-Ringe, aufweisen kann und eine zum Verpressen geeignete Struktur aufweist. An dieses Rohr kann dann insbesondere in größerer Entfernung zum das zweite Anschlussstück aufweisende Bauteil, insbesondere T-Stück, ein weiteres Bauteil, insbesondere ein zweites T-Stück, vorgesehen werden. Ein weiterer Vorteil ist hierbei, dass der als Pressbereich ausgebildete zweite Verbindungsbereich auch nach der Montage von außen sichtbar ist und somit als Kontrollbereich dienen kann.

Eine Querschnittsverengung des Düsenabschnitts ist vorzugsweise durch einen zumindest teilweise konisch zulaufenden Abschnitt realisiert. Dieser kann abschnittsweise, vorzugsweise im Bereich der größten Verengung eine Verdickung der Wanddicke aufweisen. Dadurch wird die Stabilität des Düsenabschnitts bei der Montage, insbesondere beim Verpressen, erhöht, sodass das Auftreten einer vorgegebene Verringerung des statischen Drucks sichergestellt werden kann und eine Stagnation von Medien im Rohrleitungssystem effektiver vermieden wird, ohne dass besondere Sorgfalt bei der Montage angewandt werden muss.

Zwischen dem ersten Verbindungsabschnitt und dem zweiten Verbindungsabschnitt ist ein Flanschbereich vorgesehen, wobei auf diese Weise zum einen ein Anschlag für die Anschlussstücke vorgesehen wird. Der Flanschbereich ist hierbei entsprechend auf der Außenumfangsfläche des rohrförmigen Verbindungselements vorgesehen, so dass die Anschlusstücke in das rohrförmige Verbindungselement eingeschoben werden können. Dabei ist der Flanschbereich auf der Außenumfangsfläche vorgesehen, so dass dieser besonders vorteilhaft einen Kontrollbereich zur Verfügung stellt.

Es ist weiterhin bevorzugt, wenn sich der Düsenabschnitt an den zweiten Verbindungsabschnitt anschließt und die zweite Öffnung bildet. Dadurch ist der Düsenabschnitt zusammen mit dem zweiten Verbindungsabschnitt in das zweite Anschlussstück einzuführen, ohne dass sich der Monteur Gedanken über die Positionierung des Düsenabschnitts innerhalb des Anschlussstücks bzw. des das Anschlussstück aufweisenden Bauteils machen muss. Der Düsenabschnitt bildet dabei die zweite Öffnung des rohrförmigen Verbindungselements, so dass das rohrförmige Verbindungselement besonders einfach aufgebaut und herstellbar ist, während gleichzeitig der Venturi-Effekt ausreichend ist, um eine hinreichende Verringerung des statischen Drucks zu erzielen.

Ist das rohrförmige Verbindungselement aus Metall, insbesondere aus Edelstahl, Rotguss und/oder Kupfer, hergestellt, ist das Verbindungselement besonders stabil, kostengünstig als Drehteil herstellbar und gleichzeitig im Trinkwasserbereich hygienisch unbedenklich einsetzbar. Wird das Metall hierbei in Übereinstimmung mit den zu verbindenden Bauteilen gewählt, kann eine optimale Anpassung erreicht werden, sodass eine dauerhaft dichte Verbindung möglich ist. Allerdings ist eine Materialpaarung der zu verbindenden Bauteile aus Edelstahl und Rotguss besonders chloridbeständig. Die Herstellung aus Kupfer ist besonders preisgünstig.

Die Aufgabe wird weiterhin durch eine Anordnung mit einem erfindungsgemäßen rohrförmigen Verbindungselement und mindestens einem das erste oder zweite Anschlussstück aufweisende T-Stück gelöst. Das erfindungsgemäße rohrförmige Verbindungselement ist insbesondere in Kombination mit einem T-Stück, welches das erste oder zweite Anschlussstück aufweist, vorteilhaft. Durch ein oder mehrere T-Stücke kann besonders einfach durch die an den T-Stücken vorhandenen abzweigenden Anschlusstücke eine Zu- bzw. Ableitung für eine zu spülende Leitung geschaffen werden. Außerdem kann der Düsenabschnitt des rohrförmigen Verbindungselements besonders einfach durch axiales Einschieben in den Bereich des abzweigenden Anschlusstücks des T-Stücks gelangen, um in dem Bereich der Abzweigung eine Verringerung des statischen Drucks zu erzeugen.

Vorzugsweise wird das erfindungsgemäße rohrförmige Verbindungselement beidseitig, also mit dem ersten und dem zweiten Verbindungsabschnitt mit jeweils einem T-Stück verbunden. Das abzweigenden Anschlusstücke des das zweite Anschlussstück aufweisenden zweiten T-Stücks liefert in diesem Fall die Ableitung einer Ringleitung, aus der aufgrund des in das zweite T-Stück eingeschobenen Düsenabschnitts das enthaltene Medium aufgrund der Druckdifferenzherausgedrückt wird, während das abzweigende Anschlusstück des das erste Anschlussstück aufweisenden ersten T-Stücks die Zuleitung der Ringleitung liefert. Liegen Zu- und Ableitung einer Ringleitung weiter auseinander, kann anstelle des ersten T-Stücks auch ein Rohrstück mit dem rohrförmigen Verbindungselement verbunden werden, welches dann an ein T-Stück angeschlossen wird.

Hat in der erfindungsgemäßen Anordnung das abzweigende Anschlussstück mindestens eines T-Stücks einen geringeren Innendurchmesser als die anderen beiden Anschlussstücke des T-Stücks, kann besonders effektiv die Stagnation in einer an das abzweigende Anschlussstück des T-Stücks angeschlossenen Leitung vermieden werden, da durch den größeren Volumenstrom entlang der Hauptachse des rohrförmigen Verbindungselements eine Verringerung des statischen Drucks erreicht wird, durch welche besonders effektiv eine Stagnation in einer an das abzweigende Anschlussstück angeschlossenen Leitung mit geringerem Querschnitt vermieden wird.

Liegt bei der erfindungsgemäßen Anordnung die zweite Öffnung im Wesentlichen im Bereich des abzweigenden Anschlusstücks des das zweite Anschlussstück aufweisenden T-Stücks, wird die durch den Düsenabschnitt erzeugte Druckverringerung besonders effektiv genutzt. Überraschenderweise wurde erkannt, dass in Bezug auf eine optimale Strömungsdynamik die Position des Düsenabschnitts unkritisch in Bezug auf einen ausreichenden Venturi-Effekt und somit eine Vermeidung von Stagnation ist.

Für den Fall, dass der Düsenabschnitt die zweite Öffnung bildet, ist es allerdings bevorzugt, wenn die zweite Öffnung des rohrförmigen Verbindungselements im Bereich der des abzweigenden Anschlusstücks des das zweite Anschlussstück aufweisenden T-Stücks liegt. Somit überlappt der Düsenabschnitt zumindest teilweise mit dem Bereich des abzweigenden Anschlusstücks des das zweite Anschlussstück aufweisenden T-Stücks und der Düsenabschnitt ragt in Strömungsrichtung gesehen nicht über den Bereich des abzweigenden Anschlusstücks des das zweite Anschlussstück aufweisenden T-Stücks hinaus. Es ist weiterhin bevorzugt, wenn die zweite Öffnung des rohrförmigen Verbindungselements in Strömungsrichtung gesehen im Bereich der ersten Hälfte des abzweigenden Anschlusstücks des das zweite Anschlussstück aufweisenden T-Stücks liegt. Hierdurch wird ermöglicht, besonders kurze rohrförmige Verbindungselemente vorzusehen, welche besonders kostengünstig herstellbar sind, aber, wie festgestellt wurde, eine ausreichende Verringerung des statischen Drucks erzeugen. Dadurch, dass die zweite Öffnung des rohrförmigen Verbindungselements im Bereich des abzweigenden Anschlusstücks des das zweite Anschlussstück aufweisenden T-Stücks liegt, wird zudem das Totvolumen im Bereich des Düsenabschnitts reduziert, sodass in diesem Bereich eine verminderte Stagnation des Mediums auftritt.

Die Aufgabe wird weiterhin durch eine Anordnung mit einem Rohrstrang und einer Ringleitung gelöst. Hierbei weist der Rohrstrang ein erfindungsgemäßes rohrförmiges Verbindungselement, ein erstes T-Stück und ein das zweite Anschlussstück aufweisende zweite T-Stück auf. Die Ringleitung verbindet dabei das abzweigende Anschlussstück des ersten T-Stücks und das abzweigende Anschlussstück des zweiten T-Stücks.

Mit einem Rohrstrang ist insbesondere eine Trinkwasserversorgungsleitung eines Gebäudes gemeint, welche zum Beispiel als Steigrohr verschiedene Stockwerke mit Trinkwasser versorgt. Von diesen Rohrsträngen zweigen dann Leitungen ab, welche die Entnahmestellen auf den einzelnen Etagen mit Trinkwasser versorgen. Die Rohrleitung der Rohrstränge hat hierbei insbesondere eine Nennweite von 22, 28 oder 35, während die Ringleitung eine Nennweite von vorzugsweise 15 hat. Die Ringleitung hat vorzugsweise eine Länge von maximal 20 Metern, um bei durchschnittlichem Gebrauch an anderen Entnahmestellen, welche einen Volumenstrom im Strangrohr erzeugen, auch in der nicht verwendeten Ringleitung, an dessen Ablauf ein erfindungsgemäßes rohrförmiges Verbindungselement vorgesehen ist, eine ausreichende Zirkulation zu erzeugen.

Es ist besonders bevorzugt, wenn die Ringleitung eine selten verwendete Ringleitung, wie die Ringleitung einer Heizungsfüllarmatur, eines einzelnen Ausgussbeckens, beispielsweise im Keller, oder einer Gartenarmatur ist.

Die Anordnung ist vorzugsweise derart ausgestaltet, dass aufgrund eines Volumenstroms durch den Rohrstrang von 5 bis 100 l/min der Volumenstrom in der Ringleitung zwischen 1 und 20%, vorzugsweise zwischen 1,5 und 14%, des Volumenstroms durch den Rohrstrang beträgt. Es wurde festgestellt, das mit einem erfindungsgemäßen rohrförmigen Verbindungselement diese Volumenströme durch die Ringleitung erzeugbar sind, auch ohne eine spezielle Anpassung des erfindungsgemäßen rohrförmigen Verbindungselements an die jeweiligen T-Stücke vorzusehen. Durch die geometrischen Abweichungen der konventionellen T-Stücke wird die Lage des Düsenabschnitts zwar geändert, jedoch wird gleichzeitig eine weiterhin ausreichende Spülung der Ringleitung erzeugt.

Weitere Vorteile und Merkmale der Erfindung sind der nachfolgenden Beschreibung mehrerer Ausführungsbeispiele zu entnehmen, wobei auf die beigefügte Zeichnung Bezug genommen wird. In der Zeichnung zeigen
- Fig. 1: ein Ausführungsbeispiel eines erfindungsgemäßen rohrförmigen Verbindungselements in einer Schnittansicht;
- Fig. 2: das Ausführungsbeispiel aus Fig. 1 in einer perspektivischen Schnittansicht;
- Fig. 3: das Ausführungsbeispiel aus Fig. 1 in einer perspektivischen Ansicht;
- Fig. 4a-c: drei Ausführungsbeispiele erfindungsgemäßer Anordnungen, welche jeweils das Ausführungsbeispiel eines erfindungsgemäßen rohrförmigen Verbindungselements aus den Fig. 1 - 3 aufweisen;
- Fig. 5: ein weiteres Ausführungsbeispiel einer erfindungsgemäßen Anordnung, welche ein zweites Ausführungsbeispiel eines erfindungsgemäßen rohrförmigen Verbindungselements aufweist;
- Fig. 6: ein rohrförmigen Verbindungselements;
- Fig. 7: ein Ausführungsbeispiel einer Anordnung, welche das rohrförmige Verbindungselements aus Fig. 6 aufweist;
- Fig. 8: ein Ausführungsbeispiel einer weiteren erfindungsgemäßen Anordnung.

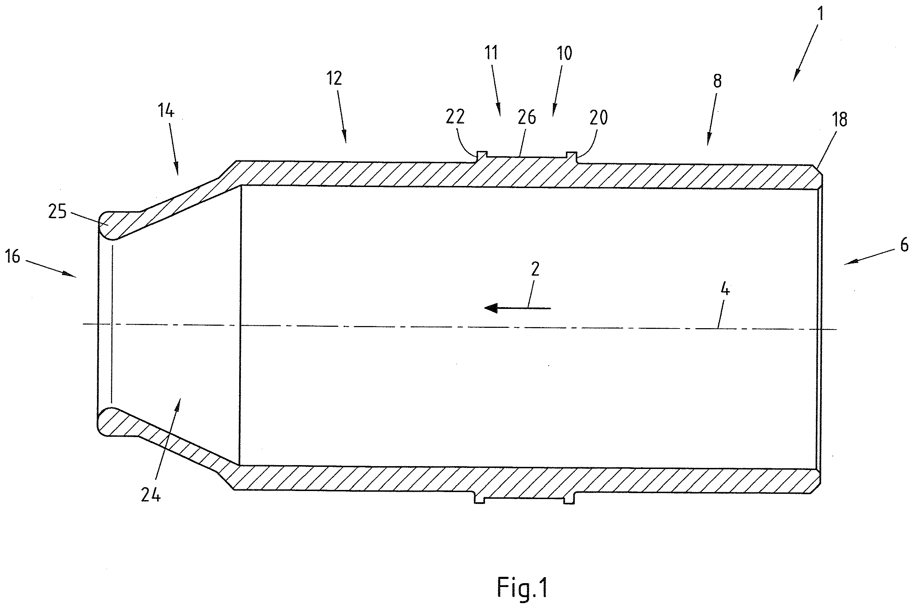

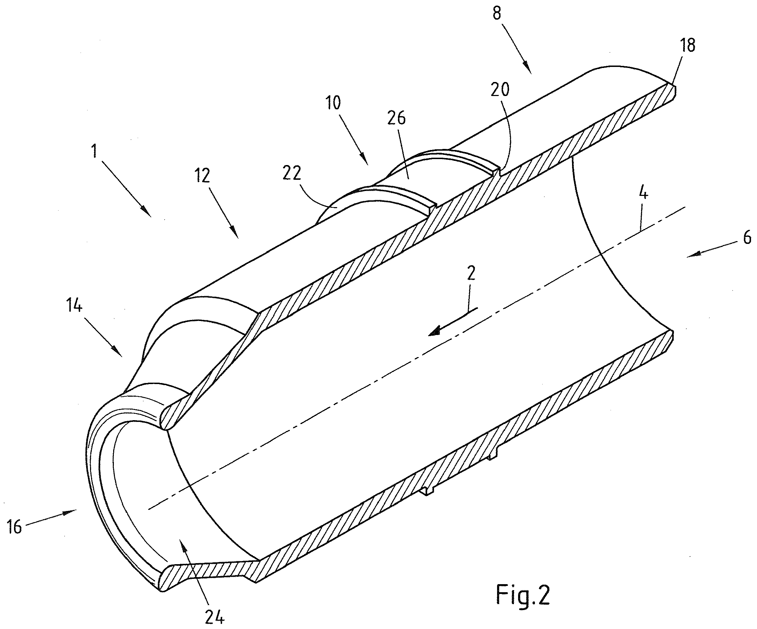

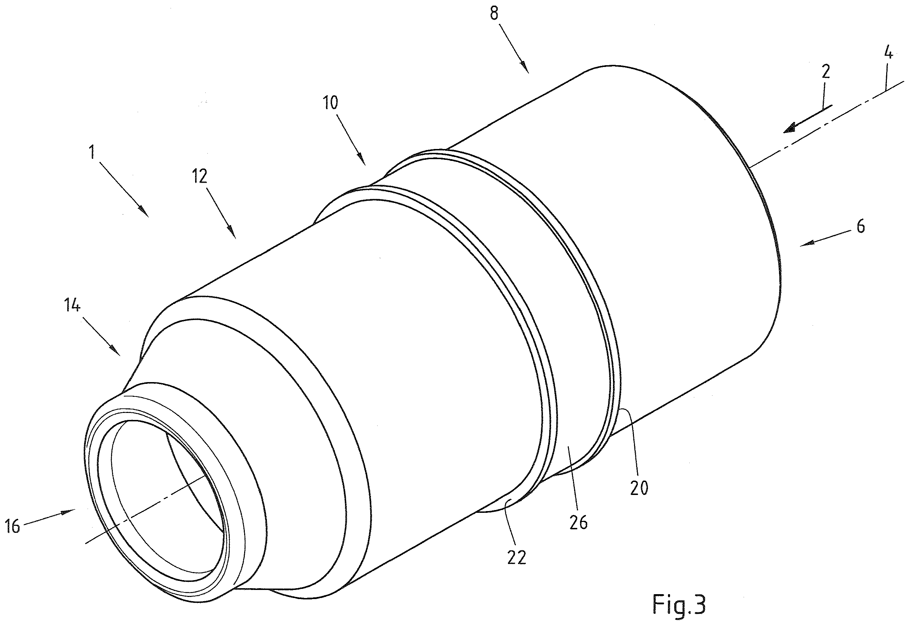

Die Fig. 1, 2 und 3 zeigen ein Ausführungsbeispiel eines erfindungsgemäßen rohrförmigen Verbindungselements 1. Hierbei zeigen Fig. 1 das Ausführungsbeispiel eines erfindungsgemäßen rohrförmigen Verbindungselements 1 in einer Schnittansicht, Fig. 2 in einer perspektivischen Schnittansicht und Fig. 3 in einer perspektivischen Ansicht zeigt.

In Fig. 1 und 2 liegen die Schnittebenen parallel zur Strömungsrichtung, welche durch den Pfeil 2 dargestellt ist.
Die Rotationssymmetrieachse 4 des rohrförmigen Verbindungselements 1 liegt ebenfalls in den Schnittebenen.
Das rohrförmige Verbindungselement weist eine erste Öffnung 6, einen ersten Verbindungsabschnitt 8, einen Kontrollbereich 10, einen zweiten Verbindungsabschnitt 12, einen Düsenabschnitt 14 und eine zweite Öffnung 16 auf.

Die Verbindungsabschnitte 8, 12 sind hierbei als Stützabschnitte ausgebildet. Der Außendurchmesser der Stützabschnitte 8, 12 ist hierbei so ausgebildet, dass die Stützabschnitte 8, 12 jeweils in ein Anschlussstück eines Bauteils, Fittings oder Rohres eingeführt und dann mit diesem verpresst werden können. Der erste Stützabschnitt 8 weist hierbei an der Öffnung 6 eine Fase 18 auf, was das Einführen in ein entsprechendes Bauteil, beispielsweise ein T-Stück, vereinfacht. Der erste Stützabschnitt 8 ist durch den Kontrollbereich 10 mit dem zweiten Stützabschnitt 14 verbunden. Der Kontrollbereich 10 ist als Flanschbereich 11 ausgebildet. Der Außendurchmesser des rohförmigen Verbindungselements 1 ist im Flanschbereich 11 derart erhöht, dass der Flanschbereich 11 einen Anschlag 20 in Strömungsrichtung 2 und einen Anschlag 22 entgegen der Strömungsrichtung 2 bildet. Hierdurch kann einerseits die Einstecktiefe des rohrförmigen Verbindungselements 1 in Bezug auf beide Verbindungsabschnitte 8, 12 limitiert werden. Andererseits wird so sichergestellt, dass der Kontrollbereich 10 auch nach der Verbindung des rohrförmigen Verbindungselements 1 mit den entsprechenden die Anschlussstücke aufweisenden Bauteilen noch von außen sichtbar ist. Da insbesondere die Fläche 26 weiterhin sichtbar ist, kann diese zum Beispiel farbig markiert werden, um den Einbau des rohrförmigen Verbindungselements 1 zu signalisieren. Auf der Fläche 26 kann ebenfalls eine Markierung vorgesehen sein, welche die Lage und/oder Ausrichtung der Düse angibt.

Der Düsenabschnitt 14 ist als sich an den zweiten Stützabschnitt 12 anschließende, konisch zulaufende Querschnittsverengung 24 ausgebildet. Die Wanddicke ist hierbei im Vergleich zu den Verbindungsabschnitten 8, 12 reduziert. Allerdings nimmt die Wanddicke im Bereich der zweiten Öffnung 16 wieder zu, bis sie im Wesentlichen der Wanddicke der Verbindungsbereiche 8, 12 entspricht. Durch die erhöhte Wanddicke kann die Stabilität des Düsenabschnitts auch bei Verpressungen gewährleistet werden. Das rohrförmige Verbindungselement 1 weist im Bereich der Austrittsöffnung des Düsenabschnitts 14, welche durch die zweite Öffnung 16 gebildet wird, eine abgerundete Kontur 25 auf, welche einer Verbesserung der Strömungsdynamik dient.

Fließt ein Medium, beispielsweise Wasser, in Strömungsrichtung 2 von der ersten Öffnung 6 durch die Verbindungsabschnitte 8, 12 und durch den Düsenabschnitt 14 zur zweiten Öffnung 16, verengt sich der Querschnitt des rohrförmigen Verbindungselements 1 im Düsenabschnitt 14 aufgrund der Querschnittsverengung 24. Dadurch entsteht in diesem Bereich eine im Vergleich zu den zuvor passierten Bereichen höhere Strömungsgeschwindigkeit, was zu einem geringeren statischen Druck führt. Durch das rohrförmige Verbindungselement 1 kann dann in dem Bauteil, in das es mit dem Düsenabschnitt eingesteckt ist, durch die Verringerung des statischen Drucks einen Volumenstrom hervorrufen und eine Stagnation von beispielsweise Trinkwasser in angeschlossenen Ringleitungen vermeiden. Das gezeigte rohrförmige Verbindungselement 1 ist dabei beispielsweise in Verbindung mit konventionellen T-Stücken einsetzbar, ohne auf geometrische Unterschiede der T-Stücke Rücksicht nehmen zu müssen.

Das dargestellte rohrförmige Verbindungselement 1 ist hierbei aus Kupfer, Edelstahl oder Rotguss hergestellt.

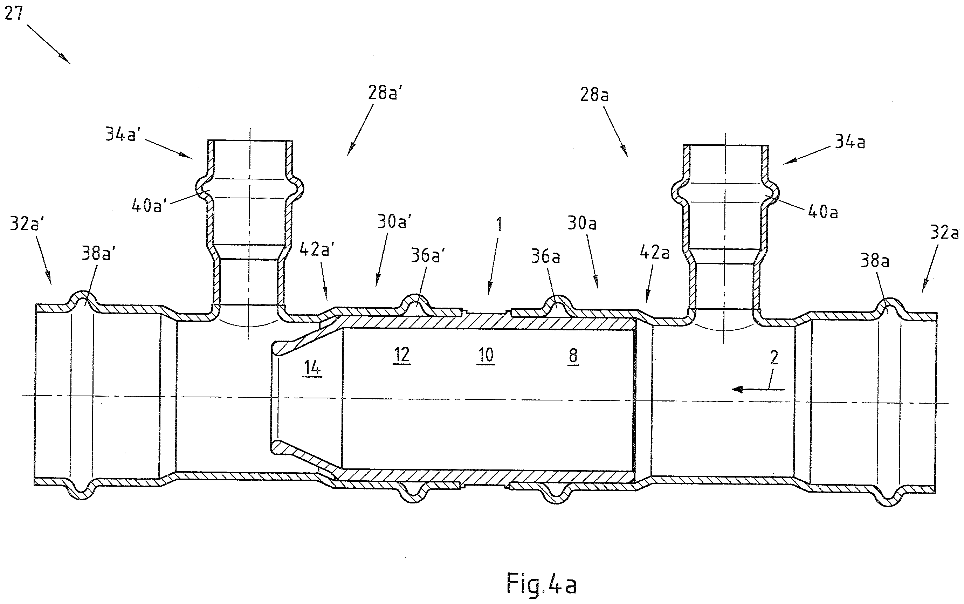

In den Fig. 4a-c ist jeweils ein Ausführungsbeispiel einer erfindungsgemäßen Anordnungen 27, welche jeweils das Ausführungsbeispiel eines erfindungsgemäßen rohrförmigen Verbindungselements aus den Fig. 1 - 3 aufweist, gezeigt.

Fig. 4a zeigt ein erstes T-Stück 28a, welches mit dem Anschlussstück 30a das erste Anschlussstück bereitstellt und welches ein weiteres Anschlussstück 32a und ein sich im rechten Winkel abzweigendes Anschlussstück 34a aufweist. Viele konventionelle T-Stücke weisen einen solchen rechten Winkel auf, ein solcher ist aber nicht zwingend. Das Anschlussstück 30a ist auf den ersten Verbindungsabschnitt 8 des rohrförmigen Verbindungselements 1 aufgeschoben. Dabei ist der Außendurchmesser des Verbindungsbereichs 8 an den Innendurchmesser des Anschlussstücks 30a angepasst. Hierzu vergrößert sich der Innendurchmesser des Anschlussstücks 30a in dem Bereich 42a. Das Anschlussstück 28a weist zusätzlich eine Nut 36a auf, in die ein Dichtelement, beispielsweise ein O-Ring (nicht dargestellt), eingelegt wird. Auch das weitere Anschlussstück 32a und das abzweigende Anschlussstück 34a weisen jeweils eine solche Nut 38a, 40a auf. Das Anschlussstück 30a ist in dem dargestellten Zustand noch nicht mit dem als Stützabschnitt ausgestalteten ersten Verbindungsabschnitt 8 des rohrförmigen Verbindungselements 1 verpresst. Dies kann jedoch mit einem handelsüblichen Presswerkzeug (nicht dargestellt) geschehen. Im vorliegenden Ausführungsbeispiel wird die Einstecktiefe des rohrförmigen Verbindungselements 1 sowohl durch den Bereich 42a also auch die Anschlagsfläche 20 limitiert. Das abzweigende Anschlussstück 34a weist einen geringeren Innendurchmesser als die anderen beiden Anschlussstücke 30a, 32a auf. Der Verbindungsbereich 8 des rohrförmigen Verbindungselements 1 liegt in Strömungsrichtung gesehen dabei hinter dem sich abzweigenden Anschlussstück 34a, sodass keine Störung der in das abzweigende Anschlussstück 34a abfließenden Strömung auftritt.

Die Anordnung 27 weist ein weiteres zum ersten T-Stück 28a baugleiches zweites T-Stück 28a' auf. Das T-Stück 28a' weist mit dem Anschlussstück 30a' das zweite Anschlussstück auf, in welches das rohrförmige Verbindungselement 1 eingeschoben ist. Dabei ist sowohl der Düsenabschnitt 14 als auch der zweite Verbindungsabschnitt 12 in das Anschlussstück 30' des zweiten T-Stücks 28a' eingeschoben. Auch das Anschlussstück 30a' ist in dem dargestellten Zustand noch nicht mit dem als Stützabschnitt ausgestalteten zweiten Verbindungsabschnitt 12 des rohrförmigen Verbindungselements 1 verpresst. Auch dies kann mit einem handelsüblichen Presswerkzeug geschehen. Die Einstecktiefe des rohrförmigen Verbindungselements 1 in den Anschlussstutzen 30a' des zweiten T-Stücks 28a' wird sowohl durch den Bereich 42a' also auch die Anschlagsfläche 22 limitiert. Dadurch wird die Öffnung 16 des Düsenabschnitts 14 im Bereich des abzweigenden Anschlussstücks 34a' positioniert.

Fließt ein Medium, beispielsweise Wasser, in Strömungsrichtung 2 durch das Anschlussstück 32a des ersten T-Stücks, durch das rohrförmige Verbindungselement 1 und schließlich durch das Anschlussstück 32a' des zweiten T-Stücks, verengt sich der Querschnitt des rohrförmigen Verbindungselements 1 im Düsenabschnitt 14 aufgrund der Querschnittsverengung 24 stärker als in der übrigen Leitung. Dadurch entsteht in diesem Bereich 14 und kurz dahinter eine im Vergleich zu den zuvor passierten Bereichen höhere Strömungsgeschwindigkeit, was zu einem geringeren statischen Druck führt. Durch das rohrförmige Verbindungselement 1 wird im Bereich des abzweigenden Anschlussstücks 34a' des zweiten T-Stücks eine Verringerung des statischen Drucks hervorgerufen. Hierdurch wird das in dem abzweigenden Anschlussstück 34a' bzw. in dem daran angeschlossenen Bauelement befindliche Medium aus diesen in das T-Stück 28a' hineingedrückt. Ist beispielsweise eine Ringleitung an die abzweigenden Anschlussstücke 34a und 34a' angeschlossen, wird durch ein Volumenstrom entlang der Strömungsrichtung 2 auch ein Volumenstrom durch die Ringleitung erzeugt, da ein Teil des Volumenstroms aufgrund der Druckdifferenz durch den Venturi-Effekt in das abzweigende Anschlussstück 34a hineingedrückt und abgezweigt wird und über das Anschlussstück 34a' wieder aus der Ringleitung heraustransportiert wird und sich wieder mit dem Volumenstrom entlang der Strömungsrichtung 2 vereinigt. Auf diese Weise kann mittels ohne weitere Anpassungen des konventionellen T-Stücks die Stagnation in Leitungssystemen kostenngünstig und trotzdem effektiv vermieden werden.

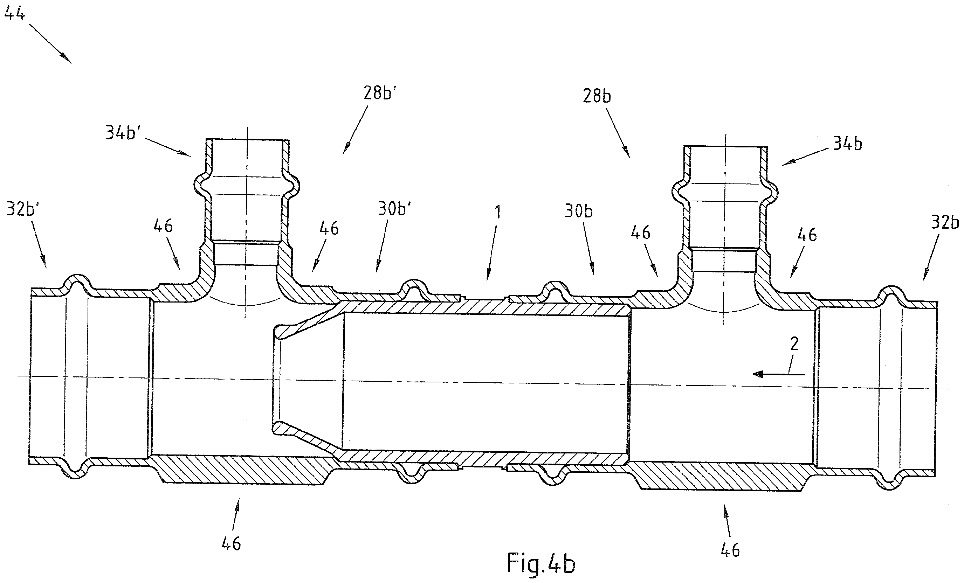

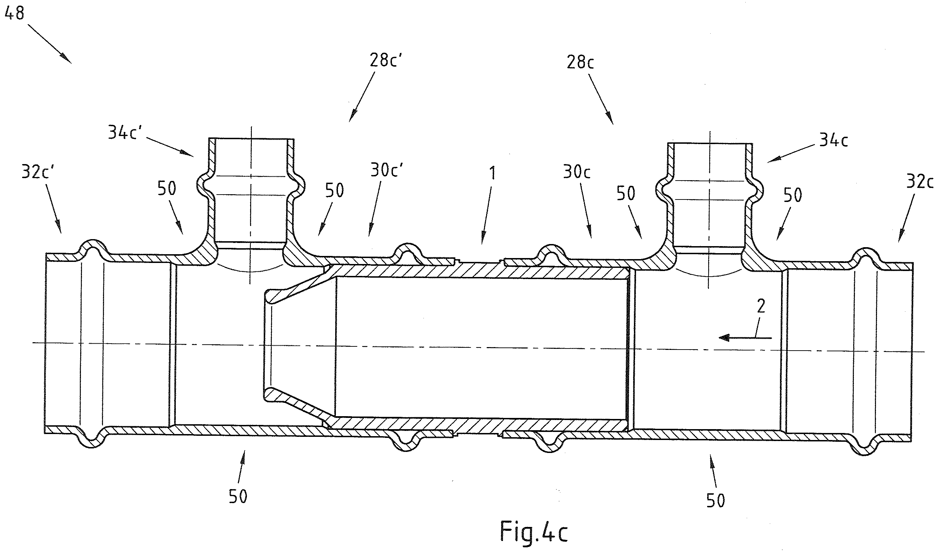

Die Fig. 4b und 4c zeigen jeweils eine der in der Fig. 4a dargestellten Anordnung 27 ähnliche Anordnung 44 bzw. 48.

Die Anordnung 44 unterscheidet sich von der Anordnung 27 dadurch, dass anstelle der T-Stücke 28a und 28a', die T-Stücke 28b und 28b' vorgesehen sind. Diese sind den T-Stücken 28b und 28b' ähnlich, unterscheiden sich jedoch dadurch, dass diese eine größere Wanddicke, insbesondere in den mit 46 gekennzeichneten Bereichen aufweisen. Dadurch ändert sich beispielsweise die Innenkontur der T-Stücke vor allem im Bereich der abzweigenden Anschlusstücke.

Auch die Anordnung 48 unterscheidet sich von der Anordnung 44. In der Anordnung 48 sind anstelle der T-Stücke 28a und 28a' die T-Stücke 28c und 28c' vorgesehen. Auch diese sind den T-Stücken 28a und 28a' zwar ähnlich, unterscheiden sich jedoch wiederum dadurch, dass diese eine größere Wanddicke, insbesondere in den mit 50 gekennzeichneten Bereichen aufweisen. Dadurch ändert sich auch bei den T-Stücken 28c, 28c' die Innenkontur der T-Stücke nicht nur unwesentlich. Ferner ist zu erkennen, dass aufgrund von anderen Geometrien der T-Stücke, insbesondere aufgrund von in Strömungsrichtung gesehen anderer Länge des Anschlussstücks 30c' des T-Stücks 28c', die zweite Öffnung 16 des Düsenabschnitts 14 im Verhältnis zum abzweigenden Anschlussstück 34c' des zweiten T-Stücks 28c' weiter in Strömungsrichtung verschoben ist, als dies bei der Anordnung 27 der Fall war. Somit ergibt sich ein größerer Überlapp von Düsenabschnitt 14 und abzweigender Anschlussöffnung 34c'.

Die Notwendigkeit der unterschiedlichen Ausgestaltungen der T-Stücke 28a, 28b, 28c kann beispielsweise durch unterschiedliche Materialeigenschaften hervorgerufen werden, sofern die T-Stücke aus unterschiedlichen Materialien hergestellt sind. Trotz der unterschiedlichen Geometrien der T-Stücke kann mit dem gleichen rohrförmigen Verbindungselement 1 ein ausreichender Venturi-Effekt erzielt werden. Insbesondere kann unabhängig von dem verwendeten T-Stück bei einem Volumenstrom von 5 bis 100 l/min entlang der Strömungsrichtung 2 ein Volumenstrom von 1 bis 20% des Volumenstroms entlang der Strömungsrichtung 2 in den an den abzweigenden Anschlusstücken 34a, 34a', 34b, 34b' und 34c, 34c' angeschlossenen Ringleitungen erzeugt werden.

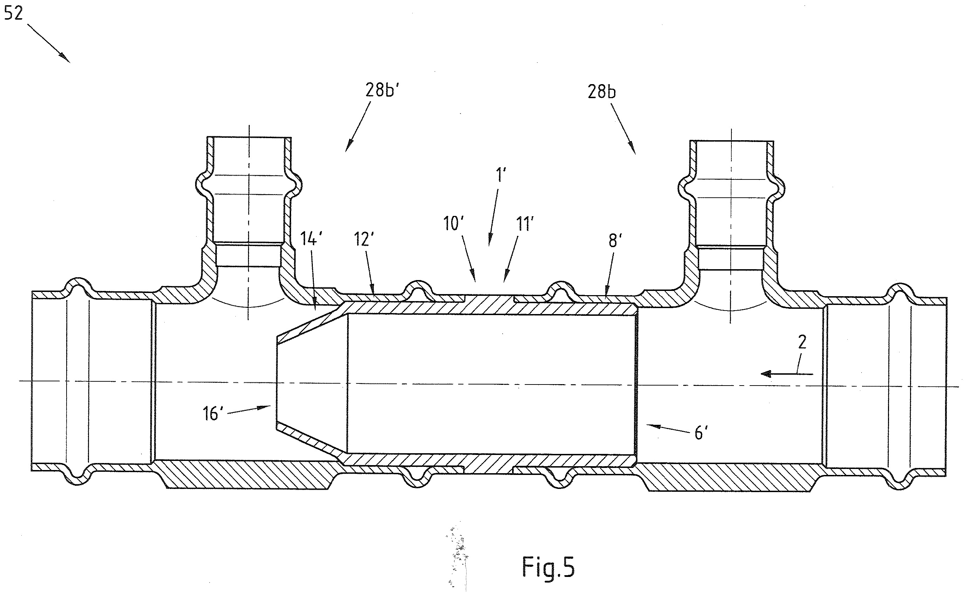

Fig. 5 zeigt ein weiteres Ausführungsbeispiel einer erfindungsgemäßen Anordnung 52, welche ein zweites Ausführungsbeispiel eines erfindungsgemäßen rohrförmigen Verbindungselements 1' aufweist. Das rohrförmige Verbindungselement 1' ist hierbei analog zu der in Fig. 4b dargestellten Anordnung in die zwei T-Stücke 28b und 28b'eingesteckt. Das rohrförmige Verbindungselement 1' unterscheidet sich von dem rohrförmigen Verbindungselement 1 durch einen alternativ ausgestalteten als Kontrollbereich 10' dienenden Flanschbereich 11' und einen alternativ ausgestalteten Düsenabschnitt 14'. Der Flanschbereich 11' weist im Gegensatz zum Flanschbereich 11 keine Vertiefung auf. Der Düsenabschnitt 14' schließt sich als konisch zulaufender Bereich an den zweiten Verbindungsabschnitt 12' an, um eine Querschnittsverengung zu erzeugen. Im Gegensatz zum Düsenabschnitt 14 weist der Düsenabschnitt 14' keine Verstärkung im Bereich der zweiten Öffnung 16' in Form einer vergrößerten Wanddicke, sondern eine im Wesentlichen konstante Wanddicke auf.

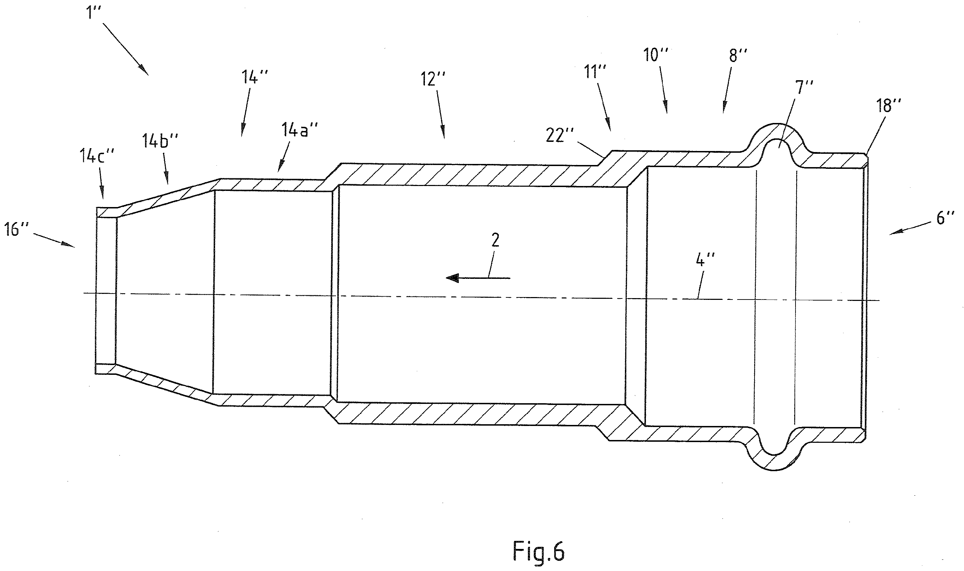

Die Fig. 6 zeigt ein rohrförmiges Verbindungselement 1". Dieses weist einen mit dem zweiten Verbindungsabschnitt 12 des rohrförmigen Verbindungselements 1 vergleichbaren Verbindungsabschnitt 12" auf. Dieser ist als Stützabschnitt ausgebildet und wird zusammen mit dem Düsenabschnitt 14" in ein Anschlussstück eingeschoben. Der erste Verbindungsabschnitt 8" ist allerdings nicht als Stützabschnitt sondern als Pressabschnitt ausgebildet. Es kann also ein Anschlussstück in den Verbindungsabschnitt 8" eingeschoben werden. Hierbei weist der als Pressabschnitt ausgebildete erste Verbindungsabschnitt 8" einen größeren Innendurchmesser auf als der als Stützabschnitt ausgebildete zweite Verbindungsabschnitt 12". Der zweite Verbindungsabschnitt weist des Weiteren eine Aufnahme in Form einer Nut 7" auf, in die analog zu den Anschlussstücken der T-Stücke 28a, 28b oder 28c ein Dichtelement, beispielsweise ein O-Ring (nicht dargestellt), eingebracht werden kann, um die Dichtigkeit nach dem Verpressen zu erhöhen.

Da der als Pressabschnitt ausgestaltete zweite Verbindungsabschnitt 12" nach dem Verpressen weiterhin sichtbar ist, dient dieser gleichzeitig als Kontrollbereich 10".

Der Flanschbereich 11'' zwischen dem ersten Verbindungsabschnitt 8" und dem zweiten Verbindungsabschnitt 12", welcher einen geringeren Innendurchmesser aufweist, dient als Anschlag 22" für das in den ersten Verbindungsabschnitt 8" einzuführende Anschlussstück.

Der Düsenabschnitt 14" weist drei sich an den zweiten Verbindungsabschnitt 12" anschließende Bereiche auf. Es folgt zunächst ein zylindrischer Bereich 14a", welcher sich mittels eines Übergangsbereichs an den Verbindungsabschnitt 12" anschließt. An diesen zylindrischen Bereich 14a" schließt sich wiederum ein konisch zulaufender Bereich 14b" an, welcher eine Querschnittsverengung bereitstellt. Schließlich schließt sich an diesen konisch zulaufenden Bereich 14b" ein weiterer zylindrischer Bereich 14c" an, welcher mit der zweiten Öffnung 16" den Düsenaustritt aufweist.

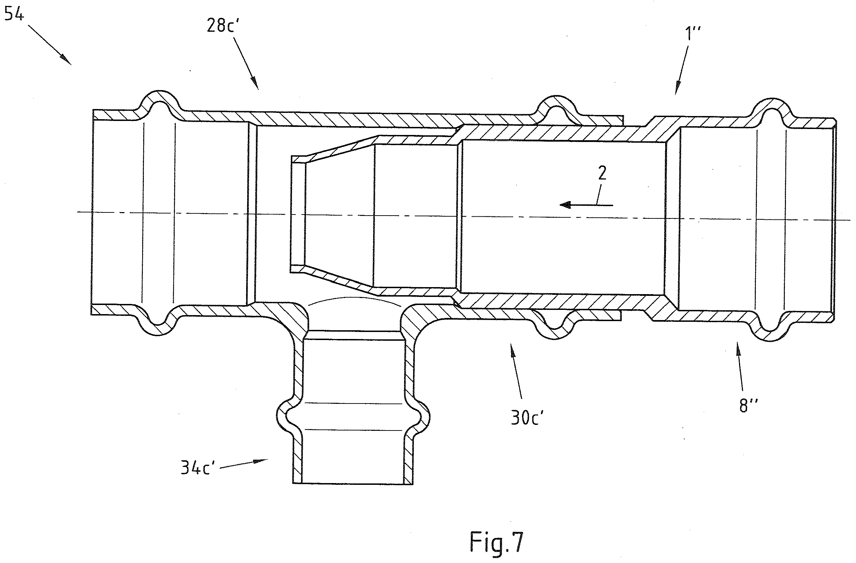

Die Fig. 7 zeigt ein Ausführungsbeispiel einer Anordnung 54, welche das rohrförmige Verbindungselements 1" aus Fig. 6 aufweist. Das rohrförmige
Verbindungselement ist in das T-Stück 28c', welches dem aus Fig. 4c entspricht, eingeschoben. Wie zu erkennen ist, wird durch das rohrförmige Verbindungselement 1" ein Verbindungsabschnitt 8" bereitgestellt, welcher baugleich zu dem Anschlussstück 30c' des T-Stücks 28c' ist. Insofern werden konventionelle T-Stücke mit einem Düsenabschnitt versehen, ohne jedoch weitere Auswirkungen auf weitere Verbindungs- oder Verpressungs-Schritte zu haben, da weitere Verbindungen wie zuvor ohne rohrförmiges Verbindungselement erfolgen können. Die anzuschließenden Bauteile werden nunmehr einfach in den Verbindungsabschnitt 8" des rohrförmigen Verbindungselements 1" geschoben anstatt direkt in das Anschlussstück 30c' des T-Stücks 28c'. Im Unterschied zu den Ausführungsbeispielen in Fig. 4a-c kann nun beispielsweise ein Rohr an den Verbindungsabschnitt 8" angeschlossen werden, um dann ein weiteres T-Stück, also das erste T-Stück 28c, in einiger Entfernung zum rohrförmigen Verbindungselement zu montieren.

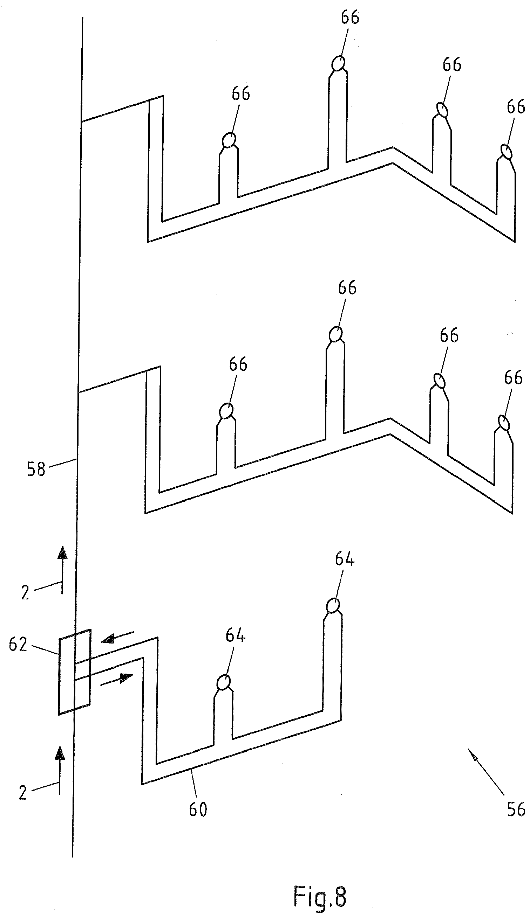

Fig. 8 ein Ausführungsbeispiel einer weiteren erfindungsgemäßen Anordnung 56. Die Anordnung weist einen Rohrstrang 58, welcher beispielsweise die unterschiedlichen Etagen eines Gebäudes mit Trinkwasser versorgt, und eine Ringleitung 60, welche beispielsweise zwei Wasserentnahmestellen 64 im Keller mit Trinkwasser versorgt, auf. Hierbei ist in dem Rohrstrang 58 an der Stelle 62 beispielsweise eine der Anordnungen 27, 44, 48 oder 52 installiert. Die Ringleitung 60 verbindet hierbei das abzweigende Anschlussstück 34a, 34b, 34c des ersten T-Stücks 28a, 28b bzw. 28c und das abzweigende Anschlussstück 34a', 34b', 34c' des zweiten T-Stücks 28a', 28b' bzw. 28c'. Durch einen Volumenstrom entlang der Strömungsrichtung 2, welcher durch eine oder mehrere der Wasserentnahmestellen 66 hervorgerufen werden kann, zirkuliert auch das sich in der Ringleitung 60 befindliche Wasser, ohne dass eine der Entnahmestellen 64 benutzt werden muss. Im Bereich der Entnahmestellen 66 wird entweder keine Spülung der Ringleitungen benötigt, da das Wasser aufgrund von regelmäßiger Benutzung in der Ringleitung nicht stagnieren kann, oder es können auch dezentrale Spülsysteme vorgesehen sein, welche im Wesentlichen der Benutzung einer der Entnahmestellen 66 gleichkommt.

## Patentansprüche

1. Rohrförmiges Verbindungselement mit
- einer ersten Öffnung (6, 6'),
- einer zweiten Öffnung (16, 16'),
- einem ersten Verbindungsabschnitt (8, 8'),
- einem zweiten Verbindungsabschnitt (12, 12'),
- einem Düsenabschnitt (14, 14') und
- einem Kontrollbereich (10, 10'),
- wobei der erste Verbindungsabschnitt (8, 8') mit einem ersten Anschlussstück (30a, 30b, 30c) verbindbar ist,
- wobei der zweite Verbindungsabschnitt (12, 12') mit einem zweiten Anschlussstück (30a', 30b', 30c') verbindbar ist,
- wobei der Düsenabschnitt (14, 14') in das zweite Anschlussstück (30a', 30b', 30c') einführbar ist,
- wobei nach der Verbindung mit dem ersten Anschlussstück (30a, 30b, 30c) und dem zweiten Anschlussstück (30a', 30b', 30c') der Kontrollbereich (10, 10') von außen sichtbar ist,
- wobei der erste Verbindungsabschnitt (8, 8') mit dem ersten Anschlussstück (30a, 30b, 30c) und der zweite Verbindungsabschnitt (12, 12') mit dem zweiten Anschlussstück (30a', 30b', 30c') verpressbar sind,
- wobei die Verbindungsabschnitte (8, 8', 12, 12') in das entsprechende Anschlussstück (30a, 30b, 30c, 30a', 30b', 30c') einführbar sind und als Stützabschnitt ausgebildet sind,
- wobei zwischen dem ersten Verbindungsabschnitt (8, 8') und dem zweiten Verbindungsabschnitt (12, 12') ein Flanschbereich (11, 11') auf der Außenumfangsfläche vorgesehen ist, welcher einen Anschlag (20, 22) für die Anschlussstücke (30a, 30b, 30c, 30a', 30b', 30c') vorsieht und den Kontrollbereich (10, 10') zur Verfügung stellt,
**dadurch gekennzeichnet,**
- **dass** der zweite Verbindungsabschnitt (12, 12') sich in Strömungsrichtung des Mediums gesehen an den ersten Verbindungsabschnitt (8, 8') anschließt und der Düsenabschnitt (14, 14') sich an den zweiten Verbindungsabschnitt (12, 12') anschließt, und dass
der Düsenabschnitt (14, 14') vollständig in das zweite Anschlussstück (30a', 30b', 30c') einführbar ist.

2. Rohrförmiges Verbindungselement nach Anspruch 1,
**dadurch gekennzeichnet,**
**dass** mindestens ein Verbindungsabschnitt (8, 8', 12, 12') eine Aufnahme (7") für ein Dichtelement aufweist.

3. Rohrförmiges Verbindungselement nach Anspruch 1 oder 2,
**dadurch gekennzeichnet,**
**dass** sich der Düsenabschnitt (14, 14') an den zweiten Verbindungsabschnitt (12, 12') anschließt und die zweite Öffnung (16, 16') aufweist.

4. Rohrförmiges Verbindungselement nach einem der Ansprüche 1 bis 3, **dadurch gekennzeichnet,**
**dass** das rohrförmige Verbindungselement (1, 1') aus Metall, insbesondere aus Edelstahl, Rotguss und/oder Kupfer, hergestellt ist.

5. Anordnung mit
- einem rohrförmigen Verbindungselement (1, 1') nach einem der Ansprüche 1 bis 4 und
- mindestens einem das erste Anschlussstück (30a, 30b, 30c) oder zweite Anschlussstück (30a', 30b', 30c') aufweisenden T-Stück (28a, 28a', 28b, 28b', 28c, 28c').

6. Anordnung nach Anspruch 5,
**dadurch gekennzeichnet,**
**dass** das abzweigende Anschlussstück (34a, 34a', 34b, 34b', 34c, 34c') mindestens eines T-Stücks (28a, 28a', 28b, 28b', 28c, 28c') einen geringeren Innendurchmesser hat als die anderen beiden Anschlussstücke (30a, 32a, 30a', 32a', 30b, 32b, 30b', 32b', 30c, 32c, 30c', 32c') des T-Stücks (28a, 28a', 28b, 28b', 28c, 28c').

7. Anordnung nach einem der Ansprüche 5 oder 6,
**dadurch gekennzeichnet,**
**dass** die zweite Öffnung (16, 16') im Wesentlichen im Bereich des abzweigenden Anschlussstücks (34a'. 34b', 34c') des das zweite Anschlussstück (30a', 30b', 30c') aufweisenden T-Stücks (28a', 28b', 28c') liegt.

8. Anordnung mit
- einem Rohrstrang (58) und
- einer Ringleitung (60),
- wobei der Rohrstrang (58)
- ein rohrförmiges Verbindungselement (1, 1') nach einem der Ansprüche 1 bis 4,
- ein erstes T-Stück (28a, 28b, 28c) und
- ein das zweite Anschlussstück (30a', 30b', 30c') aufweisendes zweites T-Stück (28a', 28b', 28c') aufweist und
- wobei die Ringleitung (60) das abzweigende Anschlussstück (34a, 34b, 34c) des ersten T-Stücks (28a, 28b, 28c) und das abzweigende Anschlussstück (34a', 34b', 34c') des zweiten T-Stücks (28a', 28b', 28c') verbindet.

## Claims

1. Tubular connection element having
- a first opening (6, 6'),
- a second opening (16, 16'),
- a first connection section (8, 8'),
- a second connection section (12, 12'),
- a nozzle section (14, 14') and
- a control region (10, 10'),
- wherein the first connection section (8, 8') is connectable to a first connector (30a, 30b, 30c),
- wherein the second connection section (12, 12') is connectable to a second connector (30a', 30b', 30c'),
- wherein the nozzle section (14, 14') is introducible into the second connector (30a', 30b', 30c'),
- wherein the control region (10, 10') is visible from the outside after connecting with the first connector (30a, 30b, 30c) and the second connector (30a', 30b', 30c'),
- wherein the first connection section (8, 8') is compressible with the first connector (30a, 30b, 30c) and the second connection section (12,12') is compressible with the second connector (30a', 30b', 30c'),
- wherein the connection sections (8, 8', 12,12') are introducible into the corresponding connector (30a, 30b, 30c, 30a', 30b', 30c') and are formed as a support section,
- wherein a flange region (11,11') is provided on the external circumferential surface between the first connection section (8, 8') and the second connection section (12, 12') which provides a stop (20, 22) for the connectors (30a, 30b, 30c, 30a', 30b', 30c') and makes the control region (10, 10') available,
**characterised in that**
- the second connection section (12, 12') adjoins the first connection section (8, 8') viewed in the flow direction of the medium and the nozzle section (14, 14') adjoins the second connection section (12, 12') and **in that** the nozzle section (14, 14') is fully introducible into the second connector (30a', 30b', 30c').

2. Tubular connection element according to Claim 1, **characterised in that** at least one connection section (8, 8', 12,12') comprises a receiving portion (7") for a sealing element.

3. Tubular connection element according to Claim 1 or 2, **characterised in that** the nozzle section (14, 14') adjoins the second connection section (12, 12') and comprises the second opening (16, 16').

4. Tubular connection element according to any one of Claims 1 to 3, **characterised in that** the tubular connection element (1, 1') is manufactured from metal, in particular stainless steel, red brass and/or copper.

5. Arrangement having
- a tubular connection element (1, 1') according to any one of Claims 1 to 4 and
- at least one T-piece (28a, 28a', 28b, 28b', 28c, 28c') comprising the first connector (30a, 30b, 30c) or second connector (30a', 30b', 30c').

6. Arrangement according to Claim 5,
**characterised in that**
the branching connector (34a, 34a', 34b, 34b', 34c, 34c') of at least one T-piece (28a, 28a', 28b, 28b', 28c, 28c') has a smaller inner diameter than the other two connectors (30a, 32a, 30a', 32a', 30b, 32b, 30b', 32b', 30c, 32c, 30c', 32c') of the T-piece (28a, 28a', 28b, 28b', 28c, 28c').

7. Arrangement according to any one of Claims 5 or 6,
**characterised in that**
the second opening (16, 16') is substantially in the region of the branching connector (34a' - 34b', 34c') of the T-piece (28a', 28b', 28c') comprising the second connector (30a', 30b', 30c').

8. Arrangement having
- a pipe run (58) and
- a ring line (60),
- wherein the pipe run (58) comprises
- a tubular connection element (1, 1') according to any one of Claims 1 to 4,
- a first T-piece (28a, 28b, 28c) and
- a second T-piece (28a', 28b', 28c') comprising the second connector (30a', 30b', 30c').
- wherein the ring line (60) connects the branching connector (34a, 34b, 34c) of the first T-piece (28a, 28b, 28c) and the branching connector (34a', 34b', 34c') of the second T-piece (28a', 28b', 28c').

## Revendications

1. Elément d'assemblage de forme tubulaire comprenant :
- une première ouverture (6, 6'),
- une deuxième ouverture (16, 16'),
- une première partie d'assemblage (8, 8'),
- une deuxième partie d'assemblage (12, 12'),
- une partie formant la buse (14, 14'), et
- une zone de contrôle (10, 10'),
- où la première partie d'assemblage (8, 8') peut être reliée à une première pièce de raccordement (30a, 30b, 30c),
- où la deuxième partie d'assemblage (12, 12') peut être reliée à une deuxième pièce de raccordement (30a', 30b', 30c'),
- où la partie formant la buse (14, 14') peut être insérée dans la deuxième pièce de raccordement (30a', 30b', 30c'),
- où, après l'assemblage avec la première pièce de raccordement (30a, 30b, 30c) et avec la deuxième pièce de raccordement (30a', 30b', 30c'), la zone de contrôle (10, 10') peut être vue de l'extérieur,
- où la première partie d'assemblage (8, 8') associée à la première pièce de raccordement (30a, 30b, 30c) et la deuxième partie d'assemblage (12, 12') associée à la deuxième pièce de raccordement (30a', 30b', 30c') peuvent être comprimées,
- où les parties d'assemblage (8, 8', 12, 12') peuvent être insérées dans la pièce de raccordement correspondante (30a, 30b, 30c, 30a', 30b', 30c') et sont configurées comme formant une partie de support,
- où, entre la première partie d'assemblage (8, 8') et la deuxième partie d'assemblage (12, 12'), il est prévu une zone formant une bride (11, 11') située sur la surface circonférentielle extérieure, laquelle zone formant une bride prévoit une butée (20, 22) pour les pièces de raccordement (30a, 30b, 30c, 30a', 30b', 30c') et fournit la zone de contrôle (10, 10'),
**caractérisé**
- **en ce que** la deuxième partie d'assemblage (12, 12'), vue dans la direction d'écoulement du milieu en circulation, se raccorde à la première partie d'assemblage (8, 8'), et la partie formant la buse (14, 14') se raccorde à la deuxième partie d'assemblage (12, 12'), et
- **en ce que** la partie formant la buse (14, 14') peut être insérée complètement dans la deuxième pièce de raccordement (30a', 30b', 30c').

2. Elément d'assemblage de forme tubulaire selon la revendication 1,
**caractérisé**
**en ce qu'**au moins une partie d'assemblage (8, 8', 12, 12') présente un logement (7") pour un élément d'étanchéité.

3. Elément d'assemblage de forme tubulaire selon la revendication 1 ou 2,
**caractérisé**
**en ce que** la partie formant la buse (14, 14') se raccorde à la deuxième partie d'assemblage (12, 12') et présente la deuxième ouverture (16, 16').

4. Elément d'assemblage de forme tubulaire selon l'une quelconque des revendications 1 à 3,
**caractérisé**
**en ce que** l'élément d'assemblage de forme tubulaire (1, 1') est fabriqué en étant composé d'un métal, en particulier d'un métal spécial, de laiton rouge et/ou de cuivre.

5. Agencement comprenant :
- un élément d'assemblage de forme tubulaire (1, 1') selon l'une quelconque des revendications 1 à 4, et
- au moins une pièce en T (28a, 28a', 28b, 28b', 28c, 28c') présentant la première pièce de raccordement (30a, 30b, 30c) ou la deuxième pièce de raccordement (30a', 30b', 30c').

6. Agencement selon la revendication 5,
**caractérisé**
**en ce que** la pièce de raccordement (34a, 34a', 34b, 34b', 34c, 34c') - qui se forme par dérivation - d'au moins une pièce en T (28a, 28a', 28b, 28b', 28c, 28c') a un diamètre intérieur plus petit que celui des deux autres pièces de raccordement (30a, 32a, 30a', 32a', 30b, 32b, 30b', 32b', 30c, 32c, 30c', 32c') de la pièce en T (28a, 28a', 28b, 28b', 28c, 28c').

7. Agencement selon l'une des revendications 5 ou 6,
**caractérisé**
**en ce que** la deuxième ouverture (16, 16') se situe pratiquement dans la zone de la pièce de raccordement (34a', 34b', 34c') - qui se forme par dérivation - de la pièce en T (28a', 28b', 28c') présentant la deuxième pièce de raccordement (30a', 30b', 30c').

8. Agencement comprenant :
- une ligne de tubes (58) et
- une conduite annulaire (60),
- où la ligne de tubes (58) présente
- un élément d'assemblage de forme tubulaire (1, 1') selon l'une quelconque des revendications 1 à 4,
- une première pièce en T (28a, 28b, 28c) et
- une deuxième pièce en T (28a', 28b', 28c') présentant la deuxième pièce de raccordement (30a', 30b', 30c'), et
- où la conduite annulaire (60) relie la pièce de raccordement (34a, 34b, 34c) - qui se forme par dérivation - de la première pièce en T (28a, 28b, 28c) et la pièce de raccordement (34a', 34b', 34c') - qui se forme par dérivation - de la deuxième pièce en T (28a', 28b', 28c').
